# EUROPEAN PATENT SPECIFICATION

(11) **EP 2 534 962 B1**
(45) Date of publication and mention of the grant of the patent: **19.02.2014**
(21) Application number: 12171751.6
(22) Date of filing: 13.06.2012
(51) Int. Cl.: A23L 1/212

(54) **Method for recovering fibers and value-added substances in industrially processed food farming products through refining processes**
Verfahren zur Gewinnung von Fasern und Substanzen mit Mehrwert in industriell verarbeiteten landwirtschaftlichen Lebensmittelprodukten durch Raffinierungsverfahren
Procédé de récupération de fibres et de substances à valeur ajoutée dans des produits agricoles alimentaires traités de manière industrielle par des procédés de raffinage

(30) Priority: 13.06.2011 IT PR20110048
(43) Date of publication of application: 19.12.2012
(73) Proprietor: Bertoli S.r.l., 43056 San Polo di Torrile, (PR) (IT); CFT S.p.A., 43122 Parma (IT)
(72) Inventor: Catelli, Roberto, 43056 TORRILE (PR) (IT); Lazzari, Alessio, 43056 TORRILE (PR) (IT); Romei, Stefano, 43056 TORRILE (PR) (IT)
(74) Representative: Benelli, Cristian

(56) References cited:
- EP-A1- 1 504 676
- WO-A1-2011/063386
- WO-A2-2007/092087
- ES-A1- 2 033 565
- FR-A1- 2 638 331
- JP-A- 59 166 053
- US-A- 4 225 628
- US-A1- 2011 028 427

## Description

### FIELD OF APPLICATION OF THE INVENTION

The present invention finds application in the field of food products processing, such, for example, vegetables (tomato, carrot, pumpkin), mediterranean fruits (apple, pear, peach, apricot, etc.) and tropical fruits (mango, pineapple, guava, etc.). In particular, it relates to a method and related system for recovering fibers and value-added substances in industrially processed food farming products and subjected to refining through centrifugal extractors.

### STATE OF THE ART

Patent document EP 1504676, which describes a system for recovering fibers and value-added substances from tomato skins, is known. The document discloses a method for treating tomato fibrous waste from different processing steps. Initially, said method provides separating skins from seeds by way of a centrifugal water separator, subsequently washing and refining the skins and transfer them, via pumping systems, to a homogenizer; finally, the skins are added to the juice and forwarded to the next processing stages.

The above mentioned method must therefore provide a dedicated washing and refining system for the skins, with associated increased skin moisture and contamination of the same though contact with water, whereas, with the invention, pulp and fiber exiting the product refining station itself (extracted from the skins with a turbo-press), are directly taken and homogenized, possibly adding only product juice.

### DISCLOSURE AND ADVANTAGES OF THE INVENTION

The purpose of the present invention is to make available to the art a method, and associated system, as defined by the claims, for recovering and reintegrating fibers and value-added substances in food products subjected to refining by centrifugal extractors.

In particular, the process described below optimally recovers all value-added components which would be otherwise wasted, thereby unexploited, or at least would reduce organoleptic properties of the final product, if reintroduced without treatment in the industrial working process/treatment.

Advantages: adding the homogenizing step, following the product refining step, aims to achieve a reduction in size of the fibers as to make them undetectable in laboratory tests and indiscernible to the sense of taste and smell of final consumers. Therefore, an enriched product will be obtained, also containing all beneficial substances naturally present in food fibers and attached to the skins (antioxidants, lycopenes, etc.), a product with enhanced organoleptic characteristics will also be obtained, particularly in terms of viscosity, consistence (Bostwick, Blotter), colour, "pulpiness" of obtainable product purée.

Said purposes and advantages are all achieved by the method and apparatus for recovering fibers and value-added substances in industrially processed food farming products, subject of the present invention, which is characterized by the appended claims below.

### BRIEF DESCRIPTION OF THR FIGURES

The specific characteristics of the invention will be more apparent from the following description of some embodiments illustrated, merely for descriptive and non-limitative purposes, in the drawings of the figures.
- Figure 1: shows a schematic view of a system embodying the process according to the invention, specifically in the case of extraction from tomatoes,
- Figure 2: shows a schematic view of a system embodying the process according to the invention, specifically in the case of extraction from fruit,
- Figure 3: shows a schematic view of a system embodying the process according to the invention, specifically in the case of extraction from tomatoes including the squeezing step.

### DISCLOSURE OF THE INVENTION

The invention comprises a process, ad related system, for recovering fibers and value-added substances in industrially processed food farming products subjected to refining by centrifugal separators.

Preliminary separation steps of coarse fibrous elements (skins and seeds), and at least a thermal treatment of the food product are provided, substantially with the purpose enzymatic deactivation.

Next, at least a refining step is provided, by means of centrifugal extraction machines.

Finally, it is foreseen that the product exiting from the refining step is further processed through a homogenizing step. Homogenizing treatment means passing the product through a homogenizer, comprising a high-pressure piston pump downstream of which one or more homogenizing valves are installed, in which the homogenizing process takes place. Homogenization is a completely mechanized process which performs breaking and dispersing of suspended liquid or solid particles to achieve homogeneous mixing of components. The resulting particles, which have extremely small size (in the range of 10 microns), provide uniformity to the homogenized product, thus preventing possible surface and decantation phenomena. Based on such principle possibility of separation is largely reduced and the product is provided with desired stability.

Before the product output from the refining line is processed by the homogenizer, processing juice/purée can be added to it.

The described method is also applicable when a squeezing operation of the fibrous portion, separated from the refining step, is present; said squeezing operation is applied at least on fibrous elements coming from a first refining stage (skins).

The product exiting the high-pressure homogenizer will be recirculated, by any means, or sent to other treatment and/or handling lines.

### FIRST EXEMPLARY EMBODIMENT

Reference is made to the field of vegetables treatment industry (tomatoes, carrots, pumpkins, etc.), specifically to tomatoes.

In order to extract tomato juice from tomato fruits, two methods are substantially carried out: a first method is called Hot Break, while a second method is called Cold Break. The method are chosen according to the product final use :
- In the Cold Break procedure, tomatoes are treated at temperature of 65°C to 73°C. With this method, colour and taste of the obtained product are maintained, and it results "softer", that is, with a lesser content of fibers, and more suitable for those final products in which one aims to highlight natural characteristics of the vegetable (colour, taste, aroma, etc.), such, for example, preserve paste.
- In the Hot Break procedure, tomatoes are rapidly heated to 92°C for about 15/60 seconds, so that fast heating deactivates enzymes/pectines. This method aims to obtain a more consistent product, suitable, for example, to produce ketchup sauce.

The plant embodying the invention is a Cold Break system, further comprising a high-pressure homogenizer located downstream of a refining chamber or station. The homogenizer receives, through a transfer pump, and processes the juice fibrous insoluble elements (pulp and fiber).

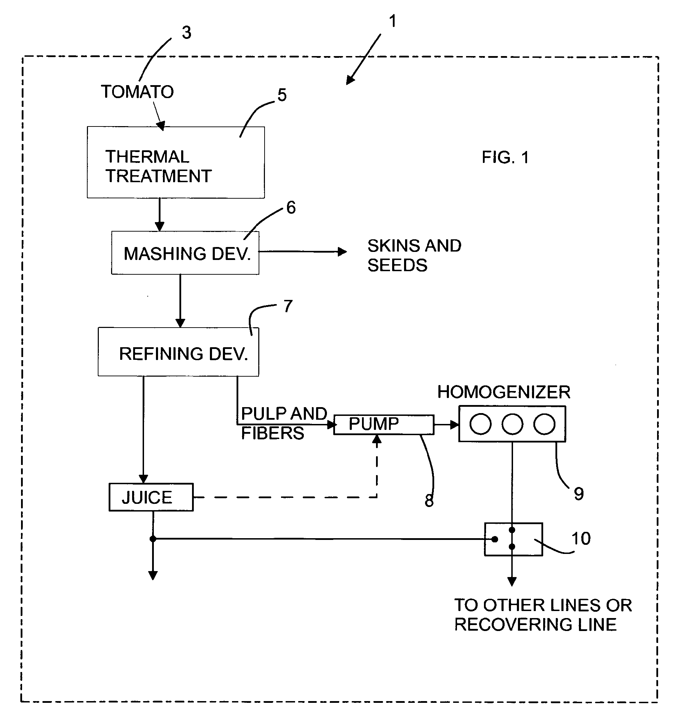

In particular, referring to figure 1, reference 1 indicates as a whole a schematic representation of a tomatoes processing plant, indicated at 3; 5 indicates the thermal treatment stage (Cold Break), while 6 and 7 indicate first and second refining steps, carried out in refining chambers or station mentioned above, where the product is forced through a set of sieves, which differ from each other in number and/or diameter of holes: first fibrous elements to be eliminated (first refining stage) are the skins, whereas the last fibrous elements to be separated from the juice (second refining stage), are pulp, fibers, and possible impurities.

Number 8 identifies the transfer pump, whereas the high-pressure homogenizer is indicated at 9.

On the line transferring fibrous insoluble elements from refining 7 to homogenizer 9, addition of a variable percentage of tomato juice is provided, in order to make the mass entering the homogenizer more fluid, ad facilitate its treatment.

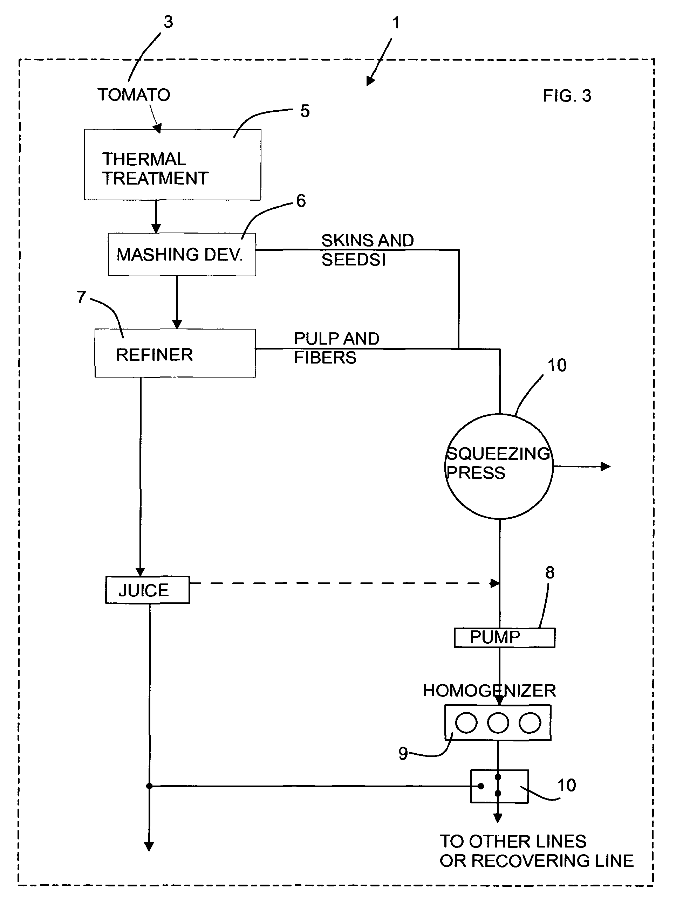

Referring to figure 3, an alternative embodiment of the described method and plant is illustrated. The presence of a squeezing operation of the fibrous portion, applied at least on fibrous elements output from the first refining stage (skins), has already been discussed. Nevertheless, said squeezing operation can also be applied to fibrous elements from the second refining stage (pulp, fibers).

In the figure, reference 10 indicates the squeezing press; the same is located between the output of refining steps 6, 7 and homogenizer 9, with 10 choosing where to direct the product.

### SECOND EXEMPLARY EMBODIMENT

An example related to the field of fruit treatment industry field for extracting fruit purée is set forth.

Purée is used, for example, as semi-finished product for obtaining other products such juices, nectars, conserves, jams, marmalades, etc.

Extraction of fruit purée can be carried out with two technologies: cold extraction and hot extraction.

Hot extraction technique provides a cooking step of triturated fruit, preceding the sieving and refining steps which determine the effective extraction of purée. Cooking, typically carried out within a heater, within which the product reaches temperatures in the range of 85°C and 95°C, mainly serves to activate oxidative enzymes (phenolases, polyphenol-oxidases) and pectolitic enzymes present in the squeezed piece of fruit. Enzymatic deactivation is necessary to prevent two unwanted effects: darkening of the product due to oxidation, and destruction of fruit pectines, which provide the finished product with the desired viscosity, by pectolitic enzymes. By carrying out cooking upstream of separation, the entire product is cooked together with the remainder of the piece of fruit, causing a noticeable deterioration of the obtained product flavour as well as a colour change with respect to the pulp natural colour.

Cold extraction allows to overcome these shortcomings, postponing cooking of the product which is performed after at least the sieving step, so that processing waste can be separated in advance, and only cooking of pulp takes place; in this way no skins are present that alter the product taste or colour. In this case, cold cleaning (extractor) is followed by heating and refining.

Also in this case refining takes place in refining chambers and the output will be, in addition to juice, a pulp and fibers stream containing contamination fragments.

The plant embodying the invention is a cold extraction system with the addition of a high-pressure homogenizer located downstream of a refining chamber or station, which receives, through a transfer pump, fibrous insoluble elements separated from purée in the previous refining step (pulp, fiber), accomplishing the proposed object of fiber recovering to increase the purée viscosity.

Also in this case, the purée could be added to the product output from the refining station in order to adjust fluidity/consistence thereof, for the homogenization treatment. The output of high-pressure homogenizer can be recirculated, and it will again be subjected to thermal treatment, or discharged in the juice.

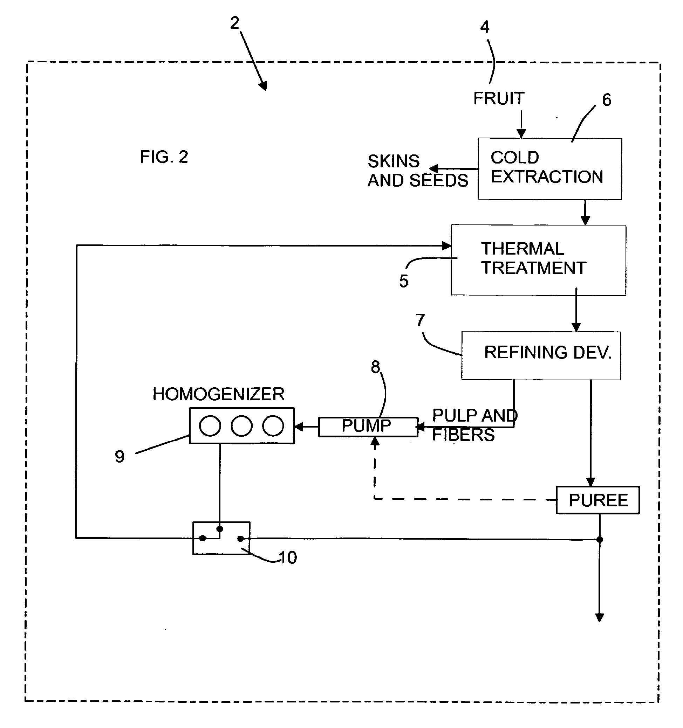

Referring in particular to figure 2, a schematic representation of a fruit, indicated at 5, treatment plant is indicated as a whole at 2. Cooking treatment is indicated at 5, while cold extraction is indicated at 6 and refining at 7, within corresponding treatment stations or chambers. Again, transfer pump, for the refined product, is indicated at 8, and high-pressure homogenizer at 9, reference number 10 indicates the choice of where to direct the product.

## Claims

1. Process for recovering fibres and value-added substances in industrially processed food farming products of the type comprising
a. at least one step of separating fibrous elements of greater size (skins and seeds),
b. at least a thermal treatment of the food farming product,
c. at least one step of refining by extraction centrifugal machines adapted to separate the fibrous portion from the juice,
wherein after said refining step follows an homogenizing step adapted to process the separated fibrous portion; **characterized by** the fact that the product obtained by the refining step is mixed with the juice of the product itself before the homogenizing step.

2. Process according to claim 1, **characterized by** the fact that before the homogenizing step, there is a squeezing step on the separated fibrous portion, said squeezing step being applied on all or a part of the fibrous elements from the first refining step or all the refining steps.

3. Process according to claims 1 - 2, **characterized by** the fact that the steps of separating the greater size fibrous elements and of thermally treating the food farming products can be performed with a reversed order.

4. A plant for the industrial processing of food products of the type comprising at least one chamber for separating/extracting skins and at least one chamber for treating or cooking the product; said chambers being arranged upstream of at least one second refining chamber adapted to separate the fibrous portion from the juice, also comprising at least one high-pressure homogenizer for treating the product exiting said refining station; wherein said high-pressure homogenizer being located downstream of said refining chamber and receiving, by a transfer pump, the separated insoluble fibrous elements; **characterized by** the fact the line transferring the insoluble fibrous elements from the refining step to the homogenizer comprises a pipe for introducing the product juice in order to make more fluid the mass entering the homogenizer and aiding its treatment.

5. Plant according to claim 4, **characterized by** the fact that it comprises a squeezing station located between said refining station and said homogenizing station for treating a portion of or all the refined products.

## Patentansprüche

1. Verfahren zur Gewinnung von Fasern und Mehrwertstoffen in industriell verarbeiteten landwirtschaftlichen Nahrungsmitteln, von der Art umfassend:
a. mindestens einen Schritt der Trennung von Faserelementen mit größeren Abmessungen (Schalen und Samen),
b. mindestens eine Wärmebehandlung des landwirtschaftlichen Nahrungsmittels,
c. mindestens einen Schritt der Raffination durch Schleuderextraktionsmaschinen, die angepasst sind, den Faseranteil aus dem Saft zu trennen,
wobei nach dem besagten Schritt der Raffination ein Schritt Homogenisierung folgt, der derart angepasst wird, um den getrennten Faseranteil zu behandeln; **dadurch gekennzeichnet, dass** das mit dem Schritt der Raffination erhaltene Produkt mit dem Saft desselben Produktes vor dem Schritt der Homogenisierung gemischt wird.

2. Verfahren nach Anspruch 1, **dadurch gekennzeichnet, dass** vom der Schritt der Homogenisierung ein Schritt von Quetschen auf dem getrennten Faseranteil erfolgt, wobei der besagte Schritt von Quetschen auf allen oder einem Anteil der Faserelemente, aus dem ersten Schritt der Raffination oder aus allen Schritten der Raffination, durchgeführt wird.

3. Verfahren nach Anspruch 1-2, **dadurch gekennzeichnet, dass** der Schritt der Trennung der Faserelemente größerer Abmessungen und der Wärmebehandlung der landwirtschaftlichen Lebensmittel, mit einer umgekehrten Reihenfolge durchgeführt werden kann.

4. Anlage für die industrielle Verarbeitung von Lebensmitteln nach der Art umfassend mindestens eine Kammer zur Trennung/Extrahieren von Schalen, und mindestens eine Kammer zur Behandlung oder zum Kochen des Produktes; wobei die besagten Kammer aufwärts bezüglich mindestens einer zweiten Kammer zur Raffination, die zum Trennen den Faseranteil aus dem Saft geeignet sind, gelegen sind, und auch einen Hochdruck-Homogenisator umfassen, um das aus der besagten Station der Raffination ausgehende Produkt zu behandeln; wobei der besagte Hochdruck-Homogenisator abwärts bezüglich der besagten Kammer zur Raffination gelegen ist und mittels einer Transferpumpe die unlöslichen getrennten Faserelemente empfängt; **dadurch gekennzeichnet, dass** die unlöslichen Faserelemente fördernde Transferlinie zwischen dem Schritt der Raffination und dem Homogenisator ein Rohr für die Einführung des Saft-Produktes umfasst, um die in den Homogenisator eintretende Masse mehr fluidisch zu machen und ihre Behandlung zu unterstützen.

5. Anlage nach Anspruch 4, **dadurch gekennzeichnet, dass** sie eine Station von Quetschen, die zwischen der besagten Station der Raffination und der besagten Homogenisierungsstation gelegen ist, um einen Anteil oder die ganzen raffinierte Produkte zu behandeln.

## Revendications

1. Procédé de récupération de fibres et de substances à valeur ajouté dans des produits agricoles alimentaires transformés industriellement, du type comprenant :
a. au moins une étape de séparation d'éléments fibreux de plus grande taille (peaux et semences),
b. au moins un traitement thermique du produit agricole alimentaire,
c. au moins une étape de raffinage par des machines centrifuges d'extraction adaptées pour séparer la partie fibreuse du jus,
dans lequel ladite étape de raffinage est suivie par une étape d'homogénéisation adaptée pour traiter la partie fibreuse séparée ; **caractérisé en ce que** le produit obtenu par l'étape de raffinage est mélangé avec le jus du produit lui-même avant l'étape d'homogénéisation.

2. Procédé selon la revendication 1, **caractérisé en ce que** avant l'étape d'homogénéisation, il y a une étape de pressage sur la partie fibreuse séparée, ladite étape de pressage étant appliquée sur tout ou partie des éléments fibreux à partir de la première étape de raffinage ou de toutes les étapes de raffinage.

3. Procédé selon les revendications 1-2, **caractérisé en ce que** les étapes de séparation des éléments fibreux de plus grande taille et de traitement thermique des produits alimentaires agricoles peuvent être réalisées avec un ordre inversé.

4. Installation pour le traitement industriel de produits alimentaires agricoles du type comprenant au moins une chambre pour la séparation/extraction de peaux et au moins une chambre pour le traitement ou la cuisson du produit; lesdites chambres étant disposées en amont d'au moins une deuxième chambre de raffinage adaptée pour séparer la partie fibreuse du jus, comprenant en outre au moins un homogénéisateur haute pression pour traiter le produit sortant de ladite station de raffinage; dans lequel ledit homogénéisateur haute pression est situé en aval de ladite chambre de raffinage et reçoit, par une pompe de transfert, les éléments fibreux insolubles séparés; **caractérisé en ce que** le conduit qui transfère les éléments fibreux insolubles de l'étape de raffinage à l'homogénéisateur comprend un tuyau pour introduire le jus du produit afin de rendre plus fluide la masse entrant dans l'homogénéisateur et d'aider son traitement.

5. Installation selon la revendication 4, **caractérisée en ce qu'**elle comprend une station de pressage située entre ladite station de raffinage et ladite station d'homogénéisation pour le traitement d'une partie ou de tous les produits raffinés.
